(19) **Europäisches Patentamt / European Patent Office / Office européen des brevets**

(11) **EP 1 949 804 A2**

(12) # EUROPEAN PATENT APPLICATION

(43) Date of publication:
**30.07.2008 Bulletin 2008/31**

(51) Int Cl.:
*A23N 12/08* (2006.01)  *C12G 1/02* (2006.01)

(21) Application number: **08100835.1**

(22) Date of filing: **23.01.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **23.01.2007 IT PD20070020**

(71) Applicant: **Sordato S.r.l.
37032 Monteforte d'Alpone VR (IT)**

(72) Inventor: **Sordato, Giorgio
37030, Montecchia di Crosara (VR) (IT)**

(74) Representative: **Gallo, Luca
Gallo & Partners S.r.l.
Via Trieste, 49
35121 Padova (IT)**

(54) **Plant for drying grapes and drying process**

(57)    Grape drying process which comprises storing the harvested grapes in a drying room (L) for an over-ripening period where the grapes undergo a treatment step with conditioning processes achieved by means of at least one air treatment plant (1) which comprises a weight detection sensor (6) associated with the grape containment means (2) and susceptible to send a signal to a control unit (7) of the plant (1) in order to condition the values of humidity, temperature and ventilation during the over-ripening period.

Fig. 1

## Description

Field of Application

The present invention concerns a plant for drying grapes and a drying process.

The plant and process of the invention are intended to be advantageously employed by wine producers in the vinification processes for obtaining *"passiti"* dessert wines.

State of the Art

The practice of drying grapes has been known since antiquity, for at least 3-4000 years. Grapes were often harvested over-ripe, though only since there had been no time for the grape harvest beforehand - and not so much in order to improve their organoleptic features.

In accordance with more recent techniques, the harvested grapes destined for drying, generally selected healthy and adapted to ensure a good alcoholic content (sugar content), are extended with the bunches in crates, on racks or placed in suitable dry and well-aerated rooms, which are known in the sector technical jargon with the name of *"fruttai"* - fruit storage rooms, i.e. drying rooms or rooms for over-ripening the grapes.

Preferably, the grapes are placed inside drying rooms, extended on the bottom of perforated plastic crates, fit and stacked on each other in order to form flanking columns set atop pallets adapted to permit their facilitated movement.

Inside the drying rooms, the grapes are left to dry for a period generally of several months' duration. During this time, the actual drying process takes place, more correctly indicated as the over-ripening process that causes a dehydration of the grapes due to the evaporation of the water contained in the individual grapes, and a metabolising of the sugars with an increase of fructose and polyphenolic substances.

The influence of the environmental conditions on the quality of the wine produced with the dried grapes is not only tied to the pre-harvest climate, but continues with the wine-pressing, since the environmental conditions during drying must be considered. Therefore, it is possible to have a perfect summer evolution, delivering a rich and high quality vintage, and nevertheless have an excessively hot and rainy fall, with prohibitive humidity levels for correct grape drying. The grapes subjected to drying, therefore, not only do not develop the desired evolution by even rot, with production losses that can even exceed 50%.

Subsequently, when the dried grapes have reached the desired drying level, after an additional selection, they are usually pressed with soft pressing adapted to avoid the breaking of stalks and pomace.

The musts thus obtained are then subjected to a typically long, slow fermentation process that is concluded when a sugar residue is reached of around 8-10%.

Subsequently, the fermentation process is stopped and the wine thus obtained is subjected to an ageing step that, in accordance with the different production techniques, can provide for storage in *barriques,* or in much larger barrels.

The above-described technique serves as an example for the production of wines such as Recioto, Amarone etc., provided with traditional sweet, fruity aroma, sometimes slightly sparkling, with alcoholic content around 15-18 degrees.

The abovementioned drying process is carefully controlled by the oenologist in order to avoid the formation of moulds that could cause the grapes to rot and in order to lead to the over-ripening of the grapes within the desired times and with the desired characteristics.

The same drying processes must in turn follow specific laws that partly regulate the drying process, providing for a drying interval and a period of the year in which it can be carried out.

Currently, the drying rooms can provide for a natural aeration or a forced aeration. The latter is obtained by providing, inside the rooms, a suitable air treatment plant capable of controlling the environmental conditions, in particular regarding temperature and humidity.

The use of the air treatment plants permitting the control of the thermo-hydro-climatic conditions of the rooms has allowed improving the production of dried grapes, but not entirely controlling the drying evolution mechanisms, nor the noble rot flourishing mechanisms adapted to improve the organoleptic qualities of the individual grapes and thus of all the grapes.

The grape drying process is in fact influenced by multiple factors comprising: the humidity of the drying rooms; the temperature of the drying rooms; the aeration of the drying rooms; the grape type to be dried; the grape characteristics due to the vintage; the Brix degrees of the grapes, i.e. the sugar concentration at the beginning of the process and which one wishes to obtain at the end of the process; the weight loss of the grapes, i.e. the loss of weight which one wishes to obtain within a certain time period and at the end of the process.

In addition, the drying process is also affected by the oenologist planning; depending on the quality of the wine that the he wishes to make and on his own experience, the oenologist will tend to subject the grapes to a preferential over-ripening process.

It is therefore entirely comprehensible that in the reference sector, there is much need to control the evolution of the drying process.

In accordance with the preamble of the main claim, the best control up to the present day was obtained by means of over-ripening rooms equipped with air treatment plants destined to condition the rooms by means of temperature and humidity regulation.

The main drawback of the drying plants and processes employed up to now is not allowing a precise control of the drying evolution.

Consequently, the grape characteristics attained at the end of the drying process depend on the corrections made by the oenologist to the environmental conditions to which the grapes were subjected during their residence in the rooms. Such humidity, temperature and ventilation corrections are usually made after repeated controls of the grape status (for example, by means of control of the Brix degrees). Such process of known type, in addition to being particularly costly due to the numerous controls that must be carried out during the entire grape drying process, does not allow obtaining a truly controlled evolution of the grape over-ripening, and does not allow obtaining a qualitatively constant product. On the other hand, the quality of the drying is strongly influenced by the ability and insight of the oenologist.

Presentation of the invention

In this situation, the basic object of the present invention is therefore that of eliminating the drawbacks of the prior art mentioned above, providing a plant for the drying of grapes and a drying process which allow improving the control of the grape drying progress.

A further object of the present finding is that of providing a simple and economical drying process which is entirely reliable from an operating standpoint.

These and still other objects are all attained by the process and plant according to the attached claims.

Brief description of the drawings

The technical characteristics of the finding, according to the aforesaid objects, can be found in the contents of the claims reported below and the advantages of the same will be clearer from the following detailed description, made with reference to the attached drawings, which represent several merely exemplifying and non-limiting embodiments thereof, wherein:

- Figure 1 shows a schematic diagram of the drying plant according to the present invention;
- Figure 2-6 show several possible layout pages of a control unit or computer program for achieving the drying process according to the present invention.

Detailed description of a preferred embodiment

With reference to the attached drawing set, indicated in its entirety with 1 is the drying plant, the object of the present invention.

It is particularly suitable for achieving the drying process according to the present invention.

The process, object of the present invention, can be employed on any grape type for the purpose of vinification and will preferably by optimised, as will be clarified below, in order to account for not only the grape type employed but also for the grape conditions due to the climatic characteristics of the vintage and hence of the particular maturation undergone.

The process provides for regulating the single variables that control the drying process, in order to account for, in addition to the grape type, also the results which one desires to attain in the characteristics of the wine.

The drying process, object of the present invention, is susceptible to being advantageously inserted within an already known vinification technology that in particular provides for, upstream of the drying, the harvesting of the grapes at the desired maturation level and the subsequent storage in spacious, equipped rooms, where the drying process takes place (noted below with the technical term of *fruttai* or drying rooms), and downstream of the drying the pressing, fermentation and then ageing.

The steps after the drying can follow the techniques already known for pressing, fermentation and ageing, that nevertheless must advantageously account for, as will be explained below, the mutations that have occurred in the individual grapes at the end of the particular drying process.

The grape bunches are stored in the rooms by placing them on traditional containment means consisting of plastic or wooden racks or crates 2.

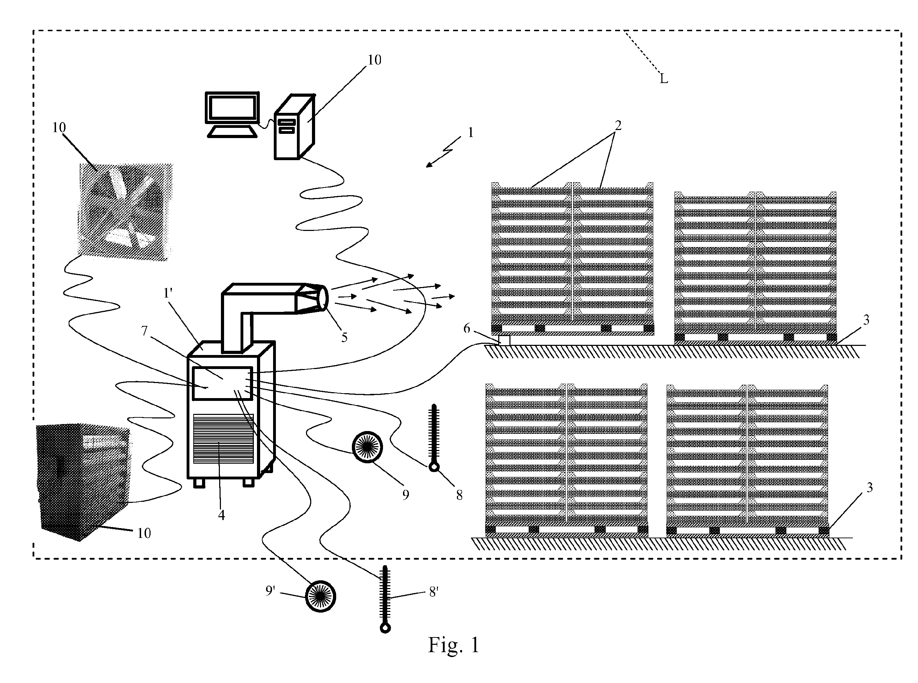

The crates 2 are preferably stacked atop pallets 3 for a facilitated movement, as is indicated in an exemplifying manner in figure 1 attached to the present description.

The crates 2 and the racks are provided with openings and holes in order to permit the grape to be easily aerated.

The grape treatment step in the drying rooms occurs with environmental condition conditioning processes achieved by means of the air treatment plant 1, adapted to regulate the humidity and the temperature in the same drying rooms according to settable values and times.

More in detail, the air treatment plants 1 are suitably equipped with one or more humidity and temperature conditioning units 1' and with one or more ventilation units 1".

The latter units will be advantageously distributed in the drying room L in order to uniformly ventilate the grapes stored on the racks or in the crates 2, and can be composed both of internal ventilators and ventilators with adjustable shutters for the air exchange of the room L with the outside environment.

Each of the conditioning units 1' advantageously operates according to a vapour compression refrigeration cycle susceptible to providing a thermal load generated by a condensation stage and a refrigeration load generated by an evaporation stage. The conditioning unit 1' is moreover provided with its own ventilation group with a suction mouth 4 and one or more emission mouths 5 in order to distribute in the room L the treated and conditioned air. The humidity of the air flow is adjusted by means of injection of a vapour or nebulised water flow (not illustrated in detail in the attached figures). The excess humidity is controlled by making the air flow pass in contact with the evaporation exchanger, which by subcooling the flow to a dew-point temperature causes its condensation and the removal of the excess humidity. Advantageously, a condensation exchanger outside the drying room L can also be provided for, if it is not necessary to heat the air flow to insert in the room.

According to the idea underlying the present invention, a weight detection sensor 6 is provided, associated with the grape containment means 2, which sends a signal to a control unit 7 of the plant 1 in order to condition the humidity and/or temperature and/or ventilation values as a function of the actual weight loss that is verified in the grapes.

The sensor 6 is advantageously associated with the grape containment means, placed in an area that is deemed to be representative of the conditions of the entire drying room L.

Of course, in particular in the case of particularly extended rooms, additional sensors 6 can be employed in communication with the control unit 7.

On the control unit 7, advantageously composed of the PLC of the conditioning unit, it is possible to initially set a programmed weight loss function through the setting of the temperature and/or humidity and/or ventilation values that the environment of the drying room L must assume during the over-ripening time.

Such weight loss function is calculated by detecting the sugar quantity initially present in the individual grapes and setting the sugar quantity that one wishes to obtain after a pre-established over-ripening time. In a first approximation, the curve can also have a rectilinear progression.

In order to refer to the percentage of sugars actually present inside the individual grape, the concentration of sugars should be measured in Brix degrees only after an initial weight loss preferably on the order of 10%, so to substantially discard the water outside the individual grape from the measurement.

The temperature, humidity and ventilation values can be controlled in an independent or dependent manner as a function of the type of air treatment plant 1 employed (or as a function of the conditioning units 1' and ventilation unit 1").

The control unit 7 for such purpose is represented by the PLC of the conditioning unit 1', and controls, by means of connections, the ventilation unit 1", a temperature sensor 8 and a humidity sensor 9. The sensors 8, 9 are preferably incorporated in the conditioning unit 1' for the interception of the air flow entering from the suction mouth 4.

The same control unit 7 can achieve the same temperature, humidity and ventilation conditions of the weight loss curve also by employing the air coming from the outside environment, and for such purpose is preferably connected to further external temperature 8' and humidity sensors 9'.

The control unit 7 calculates by means of the signal coming from the sensor 6, the actual weight loss that occurred in the grapes and consequently is capable of calculating, and advantageously automatically adjusting, the environmental temperature and humidity values and the ventilation flow in order to account for such actual weight loss.

The adjustment can take place through the manual setting of a new curve that takes into account the calculated actual weight loss, or in entirely automatic manner, according to set correction parameters.

Advantageously, in fact, the control unit can be set in order to automatically change the setting of the humidity, temperature and ventilation values provided for in the programmed weight loss curve as a function of the actual weight loss read by the sensor 6.

Therefore, once the weight loss function is set, the control unit 7 will be capable, through appropriate corrective humidity and/or temperature and/or ventilation flow values set as a function of the actual weight loss detected by means of the sensor 6, to induce the grapes to over-ripen in the desired modes and times, until they assume, after a desired period, the desired weight and thus also chemical-physical and organoleptic characteristics.

Such corrections can take into account the initial corrections with respect to preset functions, in order to account for the vintage of the test grape type on grape samples or they can be automatically set to vary with actual weight that is read.

Preferably, the corrections will be set during a first definition step of the weight loss curve, while during the self-adjustment step the corrections will occur in an entirely automatic manner, in order to ensure the final result.

The reliability of the curve set with the appropriate corrective parameters in the definition step may not require subsequent additional corrections.

Advantageously, the definition step of the weight loss function by means of the control of the actual weight loss occurs in an initial interval of the over-ripening period. For such purpose, appropriate control points are provided for at pre-established times in which the controls are carried out on grape samples. The responses obtained in this step permit appropriately accounting for not only the environmental conditions of the room L but also the grape type, the climatic conditions that led to that maturation state, and the Brix degree of sugars present in the individual grapes.

Taking into account the grape responses with regard to weight loss and Brix degrees in this initial interval and possibly also considering other characteristic grape parameters and a historical database of preceding weight loss functions, one arrives at determining the weight loss function to which the grapes will be subjected, providing for the correction parameters in order to take into account the actual weight loss encountered by the sensor.

Once such function is set, a step of self-regulation of the drying process will follow in which the control unit will be capable of directly controlling the temperature and humidity values over time, taking into account the actual weight loss in order to obtain the desired drying.

It is possible to subject the control unit 7 of the aeration plant 1 to a remote computer 10 which receives the temperature, humidity and weight loss data and processes the settings to be sent to the conditioning unit 1' and to the ventilation unit 1" for the attainment of the weight loss function suitable for controlling the evolution of the drying process for obtaining the over-ripening within the pre-established times and with the pre-established final Brix degrees.

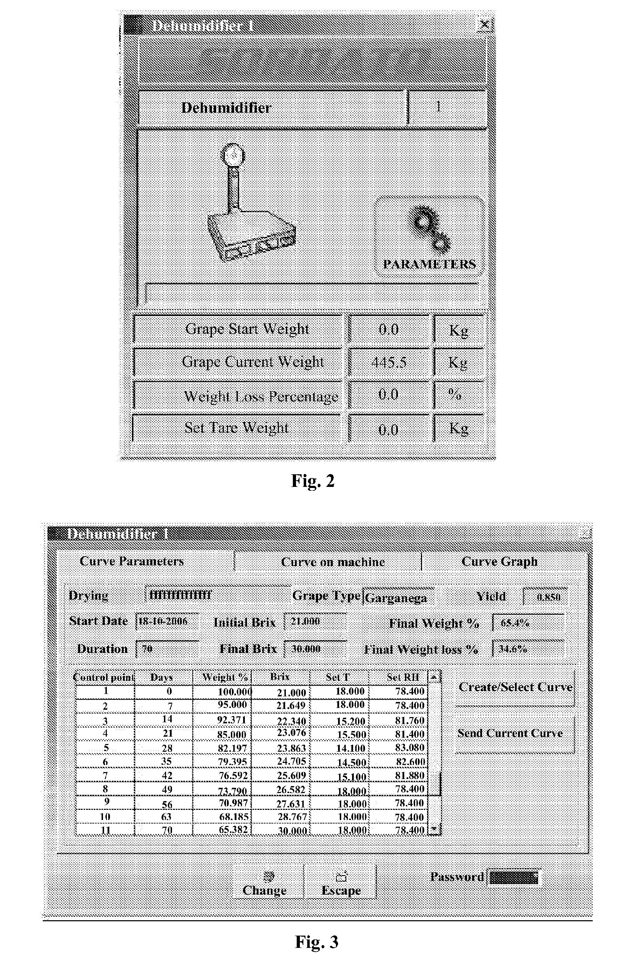

Attached figures 2-6 represent a possible graphical interface of the program for setting the parameters and settings aimed to define the weight loss function that governs the over-ripening of the grapes according to the invention.

The indications for reading the aforesaid figures are given in more in detail below.

Figure 2 represents a balance icon with the table of measured values, set at the start time, with regard to the weight of the grape sample.

The parameters key permits creating or selecting a weight loss curve and sending it to the air treatment unit.

With reference to figure 3, the "Curve Parameters" window displays the following previously created or set parameters:

　　　Drying: Distinct name of the curve, in order to be able to search for it in the file at the time of selection;
　　　Grape Type: Characteristic curve of the selected grape;
　　　Yield:
　　　Start date:
　　　Duration: Period defined in overall drying days;
　　　Initial Brix: Sampled value at the start of the drying;
　　　Final Brix: Desired value at the end of the drying period;
　　　Total Grape Weight: In percentage with respect to the total initial weight;
　　　Final Grape Weight Loss: In percentage with respect to the period;
　　　Control Point: Represents the control point, which can be selected every 7 days or 10 days; for each control point, which divides the overall drying period.
　　　Days: Partial value of the days for every control point;
　　　%Weight: Partial weight loss for every control point calculated automatically by the program as a function of the Initial and Final Brix° degree;
　　　Brix°: Partial sugar concentration value; it is automatically calculated by the program, as a function of the respective partial weight loss value;
　　　set T: Automatically sets a SET Fixed Temperature of 18°C at every new curve generation; it uses the values modified by the user, in the Machine curve window, if an existing curve is reused;

　　　set UR: Automatically calculates and sets the theoretical relative humidity (RH) value to be respected at the temperature identified in the period, the weight loss speed determined from the calculation.

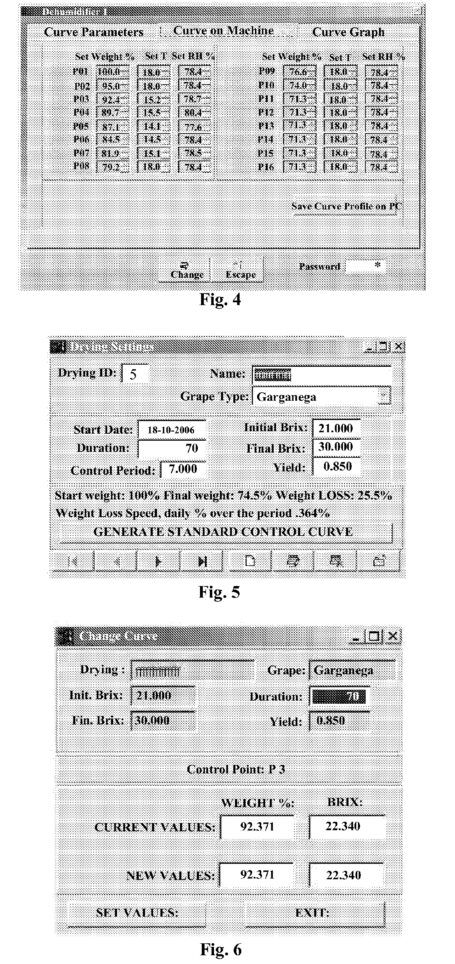

With reference to figure 4, the values are displayed that are contained in the curve table.

With reference to figure 5, a mask is indicated that is obtainable with the create/select curve key, inside of which it is possible to select a curve belonging to the file, or Create a new Curve by compiling the following fields:

　　　Name: (unequivocally identifies the drying curve);
　　　Grape type: (Selects the characteristic curve related to the grape type monitored by the balance);
　　　Yield:
　　　Start date:
　　　Duration: (Period defined in overall drying days);
　　　Initial Brix: (sampled value at the start of the drying);
　　　Final Brix: (desired value at the end of the drying period).

The Program, once the curve is selected or the newly created curve is saved with the "SAVE" key, calculates and shows the user the following values:

　　　Initial Grape Weight: (In percentage);
　　　Final Grape Weight: (In percentage);
　　　Total Grape Weight Loss: (In percentage);
　　　Daily percentage weight loss speed over the control period.

Once the curve is verified, by pressing the key "GENERATE CONTROL CURVE", the program updates the table contained in the "CURVE PARAMETERS" window and sets the temperature and humidity parameters with the logic defined by point 2).

In the automatic generation of the curve, the Temp.°C and RH% values are favoured belonging to the below-specified safety area:

　　　The Safety Point is the combination of temperature and humidity values that can damage the health of the grapes and is always calculated in the following manner:

$$100\%RH-(Temp°C*1.2).$$

By pressing the "Escape" key, the values calculated inside the table are displayed and confirmed.

By pressing the "Send Current Curve" key, the values related to the weight loss, set Temperature and set Humidity are set in the machine and can be viewed in the "CURVE ON MACHINE" page.

By pressing the Modify key on the "MACHINE CURVE" window, it is possible to separately vary the Temperature or the Humidity and the program automatically recalculates the second parameter, maintaining the defined weight loss constant.

If the temperature and humidity values come from automatic generation, where the safety point control intervened by locking the set values, it can happen that the combination of the Temp. and RH values does not ensure the desired weight loss speed.

It is any case possible to allow the program to suggest the temperature or humidity to set that ensures the weight loss speed, respectively operating on the humidity or temperature parameter.

If the user settings exceed the safety threshold, the program highlights in red the boxes of the values but does not lock the setting, permitting the user to set values beyond the precalculated limit.

The calculation limits are present as specified below:

Minimum Temperature: (Below 7°C, the program stops recalculating the relative value);
Minimum humidity: (Below 25% RH, the program stops recalculating the related value);
Safety point: (This is the combination of temperature and humidity values that can damage the health of the grapes and is always calculated in the following manner): 100%RH-(Temp°C*1.2).

If the user settings exceed the safety threshold, the program highlights in red the boxes of the values, but does not lock the setting, permitting the user to set values beyond the precalculated limit.

The Save Profile on PC key updates the temperature and humidity values contained in the table of the "CURVE PARAMETERS" page.

The Send key sends the parameters to the machine, which automatically receives the settings of the PC; only if, within the parameters of the dehumidifier in the "ON/OFF" window, "CONTROL ENABLED BY WEIGHT TABLE" has come up will the machine follow the values sent by the PC, otherwise it will use the set RH% and T° fixed by the user.

With a double click on the line of the control point in question, it is possible to insert, in the window of figure 6, the actual value of the weight loss drawn by the balance, the actual sampled Brix degree, and the drying period.

The program automatically recalculates the following new values for the subsequent control points:

partial weight losses
partial Brix°
Set point. Partial humidity

In such a manner as to maintain the Brix degree value fixed at the end of the drying period defined at the start by the user.

Also forming the object of the present invention is a grape drying plant which in particular lends itself for achieving the above-illustrated process, and comprises, employing the same reference numbers used above: one or more drying rooms L; containment means for the storage of the grapes, constituted by racks or crates 2 (the latter advantageously stacked) that can be placed in the drying rooms L for an over-ripening period; an air treatment plant 1 adapted to regulate, according to settable values, the humidity, temperature and ventilation in the drying room L; a detection sensor 6 of the weight associated with the grape containment means subject to sending a signal to a control unit 7 of the air treatment plant 1 for conditioning the humidity, temperature and ventilation values.

Advantageously, the weight detection sensor 6 consists of a load cell, in particular placeable underneath a loading pallet of the crates. The pallets are typically of 80 x 120 cm size capable of supporting, for example, ten or more crate layers, each formed by 4 flanked crates of 40 x 60 cm size in order to cover the pallet area.

Such cell emits, as a function of the detected weight, an analogue signal in the range of 4-20 mA that is transduced by the control unit 7 of the air treatment unit 1.

Thanks to such plant and such process, the invention permits ensuring the organoleptic properties of the wines obtained by passito wines.

In particular, the invention permits controlling the evolution of the over-ripening in a precise manner, verifying the weight loss in real time and consequently modifying the environmental characteristics of humidity and temperature.

The process thus conceived therefore attains the pre-established objects.

Of course, it could also, in its practical achievement, have variants that are different from that illustrated above, without departing from the scope of the present invention.

In addition, all details can be substituted with technically equivalent elements.

## Claims

1. Grape drying process which comprises the following operating steps:

- harvesting the grapes from the vines;
- storing the harvested grapes in at least one drying room (L) for a period of over-ripening;
- treating the grapes in said drying room (L) with conditioning processes of the environmental conditions, achieved by means of at least one air treatment plant (1) capable of regulating, in a settable manner, the humidity, temperature and ventilation in said drying room (L);

**characterised in that** said plant (1) comprises a weight detection sensor (6), associated with grape containment means (2), susceptible to sending a signal to a control unit (7) of the plant (1) in order to condition said humidity and/or temperature and/or ventilation values during said over-ripening period.

2. Process according to claim 1, **characterised in that** said control unit (7) sets over time, by means of the actuation of said air treatment plant (1), the temperature, humidity and ventilation values inside said drying room (L) according to a programmed weight loss function, and **characterised in that** said control unit detects, by means of said sensor (6), the actual weight loss that occurred in the grapes and consequently calculates the environmental temperature and/or humidity and/or ventilation values to set in said air treatment plant (1) in order to impose, on said grapes, said programmed weight loss function, i.e. the achievement of a pre-established sugar concentration in the grapes and a pre-established over-ripening time.

3. Process according to claim 1, **characterised in that** said control unit (7) automatically modifies the setting of said humidity and/or temperature and/or ventilation values provided for in said programmed curve as a function of the actual weight loss read by said sensor (6).

4. Process according to claim 2, **characterised in that** said control unit (7) is connected to a remote computer (10) that receives the temperature, humidity and weight loss data from said air treatment plant (1) and processes the settings to send to the control unit (7) for the definition of the weight loss function suitable for controlling the evolution of the drying process.

5. Process according to claim 2, **characterised in that** it comprises a definition step of the weight loss function by means of control of said actual weight loss and indices related to the grape status, as in particular the index related to the Brix degrees, for an initial interval of the over-ripening period.

6. Process according to claim 5, **characterised in that** it comprises a self-regulation step in which said control unit (7) directly controls the temperature and/or humidity and/or ventilation values over time, as a function of said weight loss function obtained from said definition step, in order to obtain the desired drying.

7. Process according to claim 2, **characterised in that** the weight loss function adapted to regulate the evolution of the environmental humidity and temperature values is automatically influenced by actual weight loss values read by said sensor (6), i.e. it can be reset during the drying process in order to account for indices related to the grape status, such as the Brix degrees.

8. Grape drying plant which comprises:

    - at least one drying room (L);
    - containment means (2) for storing the grapes that can be placed in said drying room (L) for an over-ripening period;
    - at least one air treatment plant (1) adapted to regulate, according to settable times and values, the humidity, temperature and ventilation in said drying room (L);

    **characterised in that** it comprises a detection sensor (6) of the weight associated with said containment means (2) of said grapes susceptible to send a signal to a control unit (7) of the air treatment plant (1) in order to condition said humidity and/or temperature and/or ventilation values.

9. Plant according to claim 8, **characterised in that** said control unit (7) regulates, by means of the actuation of said air treatment plant (1), the temperature and/or humidity values of the environment of said room and/or ventilation values according to a programmable weight loss function.

10. Plant according to claim 8, **characterised in that** said control unit (7) detects, by means of the signal of said sensor (6), the actual weight loss that occurred in the grapes and consequently calculates the environmental temperature and/or humidity and/or ventilation values to set in said air treatment plant (1) in order to impose, on said grapes, said programmed weight loss function, i.e. the achievement of a pre-established sugar concentration in the grapes and a pre-established over-ripening time.

11. Plant according to any one of the claims 8 - 10, **characterised in that** said control unit (7) is connected to a remote computer (10), which receives the temperature, humidity and weight loss data and controls a new setting of humidity and/or temperature and/or ventilation parameters in order to impose, on said grapes, said programmed weight loss function, i.e. the achievement of a pre-established sugar concentration in the grapes and a pre-established over-ripening time.

12. Plant according to claim 8, **characterised in that** said sensor (6) is composed of a load cell, in particular placeable underneath a container loading pallet.

Fig. 1

EP 1 949 804 A2

**Fig. 2**

**Fig. 3**

**Dehumidifiers**

**Curve Parameters**   **Curve on Machine**   **Curve Graph**

| | Set Weight % | Set T | Set RH % | | | Set Weight % | Set T | Set RH % |
|---|---|---|---|---|---|---|---|---|
| P01 | 100.0 | 18.0 | 78.4 | | P09 | 76.6 | 18.0 | 78.4 |
| P02 | 95.0 | 18.0 | 78.4 | | P10 | 74.0 | 18.0 | 78.4 |
| P03 | 92.4 | 15.2 | 78.7 | | P11 | 71.3 | 18.0 | 78.4 |
| P04 | 89.7 | 15.5 | 80.4 | | P12 | 71.3 | 18.0 | 78.4 |
| P05 | 87.1 | 14.1 | 77.6 | | P13 | 71.3 | 18.0 | 78.4 |
| P06 | 84.5 | 14.5 | 78.4 | | P14 | 71.3 | 18.0 | 78.4 |
| P07 | 81.9 | 15.1 | 78.5 | | P15 | 71.3 | 18.0 | 78.4 |
| P08 | 79.2 | 18.0 | 78.4 | | P16 | 71.3 | 18.0 | 78.4 |

Save Curve Profile on PC

Change   Escape   Password   *

**Fig. 4**

---

**Device Setting**

Drying ID: 5   Name: ____

Grape Type: Garganega

Start Date: 18-10-2006   Initial Brix: 21.000
Duration: 70   Final Brix: 30.000
Control Period: 7.000   Yield: 0.850

Start weight: 100% Final weight: 74.5% Weight LOSS: 25.5%
Weight Loss Speed, daily % over the period .364%

**GENERATE STANDARD CONTROL CURVE**

**Fig. 5**

---

**Change Curve**

Drying : ____   Grape: Garganega
Init. Brix: 21.000   Duration: 70
Fin. Brix: 30.000   Yield: 0.850

Control Point: P 3

| | WEIGHT %: | BRIX: |
|---|---|---|
| CURRENT VALUES: | 92.371 | 22.340 |
| NEW VALUES: | 92.371 | 22.340 |

SET VALUES:   EXIT:

**Fig. 6**